# EUROPEAN PATENT APPLICATION

(11) **EP 2 949 450 A1**
(43) Date of publication of application: **02.12.2015**
(21) Application number: 15158498.4
(22) Date of filing: 10.03.2015
(51) Int. Cl.: B29C 55/08, B29C 55/20

(54) **FILM MANUFACTURING APPARATUS AND METHOD THEREOF**

(30) Priority: 30.05.2014 KR 20140066031
(71) Applicant: Samsung Electronics Co., Ltd, Gyeonggi-do 443-742 (KR)
(72) Inventor: Song, Sun Jin, 121-030 Seoul (KR); Nakashima, Hirosh, 445-170 Hwaseong-si (KR); Sohn, Byung Hee, Yongin-si (KR); Ahn, Chan Jae, Seoul (KR); Hong, Sung Woo, Seoul (KR)
(74) Representative: Greene, Simon Kenneth

(57) **Abstract**

A film manufacturing apparatus which includes: a material supply unit (100) which supplies an intermediate film; a pre-heating unit (210) which pre-heats the intermediate film supplied from the material supply unit; a stretching unit (220) which stretches and performs a first heat-treatment to the intermediate film supplied through the pre-heating unit; a heating treatment unit (230) which performs a second heat-treatment to the stretched intermediate film supplied from the stretching unit; a clipping device (310, 310', 320, 320', 330, 330') which clips lateral ends of the intermediate film to transfer the intermediate film and applies a transverse directional tension to the intermediate film; and optionally a cutting device (410, 410') disposed in at least one of the stretching unit and the heat-treatment unit, wherein the cutting device separates the lateral ends from a center portion of the intermediate film by cutting the intermediate film.

A film manufacturing method using said apparatus is also disclosed.

## Description

### FIELD OF THE INVENTION

The disclosure relates to an apparatus for manufacturing a film.

### BACKGROUND OF THE INVENTION

Various films, such as a substrate film, a window film, a retardation film and the like, are typically used in a flat display device such as a liquid crystal display and the like. Generally, a melt extrusion method or a solution casting method is used to manufacture such a film. The melt extrusion method is a method for manufacturing a film by melting a polymer and then extruding the polymer using an extruder, and has features of high productivity and low cost. The solution casting method is a method in which a flexible membrane is formed on a supporter by letting a polymer solution including a polymer and a solvent flow onto the supporter. Next, when the flexible membrane is formed on the supporter, the flexible membrane is separated from the supporter and is then used as a wet film. A film is finally produced by evaporating the solvent from the wet film.

When manufacturing such a film, a tenter device for holding the film with clips may be used to control an optical characteristic of the film by gripping the film to effectively prevent contraction to thereby improve flatness of the film or stretching of the film in a predetermined direction.

### SUMMARY OF THE INVENTION

When a film for a substrate is manufactured using a tenter device for holding the film with clips, the film may have undesired light retardation or a birefringence characteristic, or the film may have an undesired color.

Exemplary embodiments of the invention relate to a film manufacturing apparatus that effectively prevents a film from having undesired light retardation or a birefringence characteristic during a manufacturing process.

An exemplary embodiment of the invention provides a film manufacturing apparatus that effectively prevents a film from having an undesired color, and a manufacturing method thereof.

A first aspect of a film manufacturing apparatus according to the invention includes: a material supply unit which supplies an intermediate film; a pre-heating unit which pre-heats the intermediate film supplied from the material supply unit; a stretching unit which stretches and performs a first heat treatment to the intermediate film supplied through the pre-heating unit; a heating treatment unit which performs a second heat treatment to the stretched intermediate film supplied from the stretching unit; a clipping device which clips lateral ends of the intermediate film to transfer the intermediate film and applies a transverse directional tension with respect to a transfer direction of the intermediate film, to the intermediate film; and a cutting device disposed in at least one of the stretching unit and the heat-treatment unit, where the cutting device separates the lateral ends from a center portion of the intermediate film between the lateral ends by cutting the intermediate film.

In an exemplary embodiment, the film manufacturing apparatus may further include a control roll which controls a transfer directional tension of the intermediate film. In such an embodiment, the control roll may be disposed subsequent to the cutting device in the transfer direction. In such an embodiment, a location of the cutting device may be movable in the stretching unit or the heat-treatment unit. In such an embodiment, the cutting device may cut the intermediate film when a heat-treatment temperature is in a range between about 250 °C to about 400 °C.

In an exemplary embodiment, the film manufacturing apparatus may include a film recovery unit which receives a film passed through the heat-treatment unit by spirally winding the film.

In another aspect, a film manufacturing apparatus according to the invention includes: a material supply unit which supplies an intermediate film; a pre-heating unit which pre-heats the intermediate film supplied from the material supply unit; a stretching unit which stretches and performs a first heat treatment to the intermediate film supplied through the pre-heating unit; a heating treatment unit which performs a second heat treatment to the stretched intermediate film supplied from the stretching unit; and a clipping device which clips lateral ends of the intermediate film to transfer the intermediate film and applies a transverse directional tension with respect to a transfer direction of the intermediate film to the intermediate film, where the clip device removes the transverse directional tension by selectively unclipping the intermediate film in at least one of the stretching unit and the heat-treatment unit.

In an exemplary embodiment, the film manufacturing apparatus may further a control roll which controls a transfer directional tension of the intermediate film. In such an embodiment, the control roll may be disposed subsequent to the cutting device in the transfer direction.

In an exemplary embodiment, the clip device may include a plurality of clip protrusions, and the clip protrusions may clip or unclip the intermediate film independently of each other.

In an exemplary embodiment, the clip device may unclip the intermediate film when a heat-treatment temperature is in a range between about 250 °C and about 400 °C.

In an exemplary embodiment, the film manufacturing apparatus may further include a film recovery unit which receives a film passed through the heat-treatment unit by spirally winding the film.

An exemplary embodiment of a film manufacturing method according to the invention includes: supplying an intermediate film; clipping lateral ends of the intermediate film to move the intermediate film and to apply a transverse directional tension to the intermediate film with respect to a movement direction of the intermediate film; pre-heating the intermediate film; stretching and performing a first heat treatment to the pre-heated intermediate film; and performing a second heat treatment to the intermediate film on which the first heat-treatment is performed, where the film manufacturing method further includes removing the transverse directional tension applied to the intermediate film when at least one of the first heat-treatment and the second heat-treatment is performed.

In an exemplary embodiment, the removing the transverse directional tension from the intermediate film may include separating the lateral ends of the intermediate film from a center portion of the intermediate film between the lateral ends or unclipping the lateral ends of the intermediate film.

In an exemplary embodiment, the removing the transverse directional tension from the intermediate film may be performed when a heat treatment temperature is in a range between about 250 °C and about 400 °C.

In an exemplary embodiment, the film manufacturing method may further include recovering a film by spirally winding the film passed through the second heat treatment to receive the film.

According to exemplary embodiments of the invention, clipping of a film is released or a clipped portion is cut to be separated in a predetermined process during a heat-treatment process of the film manufacturing apparatus such that a transverse directional tension of the film may be reduced and the manufactured film may be effectively prevented from having an undesired optical retardation characteristic or an undesired color.

### BRIEF DESCRIPTION OF THE DRAWINGS

The above and other features of the invention will become more apparent by describing in further detail exemplary embodiments thereof with reference to the accompanying drawings, in which:
FIG. 1 is a top view of an exemplary embodiment of a film manufacturing apparatus according to the invention;
FIG. 2 is a side view of a part of the film manufacturing apparatus of FIG. 1;
FIG. 3 is a top view of a part of the film manufacturing apparatus of FIG. 1;
FIG. 4 is a side view of a part of another exemplary embodiment of a film manufacturing apparatus according to the invention; and
FIG. 5 is a graph illustrating retardation distribution of a film manufactured using an exemplary embodiment of the film manufacturing apparatus according to the invention and retardation distribution of a film manufactured using a conventional film manufacturing apparatus.

### DETAILED DESCRIPTION

The invention now will be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinafter, exemplary embodiments of a liquid crystal display device according to the invention will be described in detail with reference to the accompanying drawings.

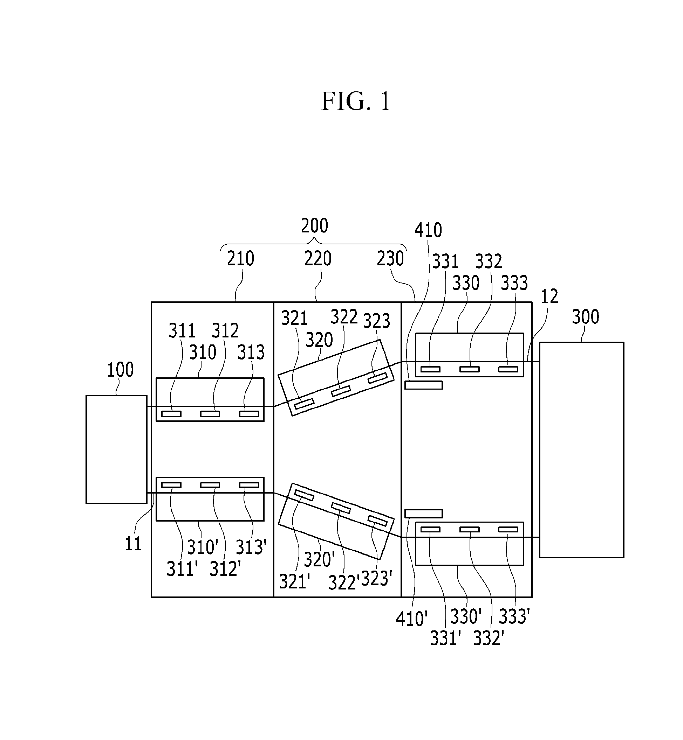

First, an exemplary embodiment of a film manufacturing apparatus according to the invention will be described with reference to FIGS. 1 to 3.

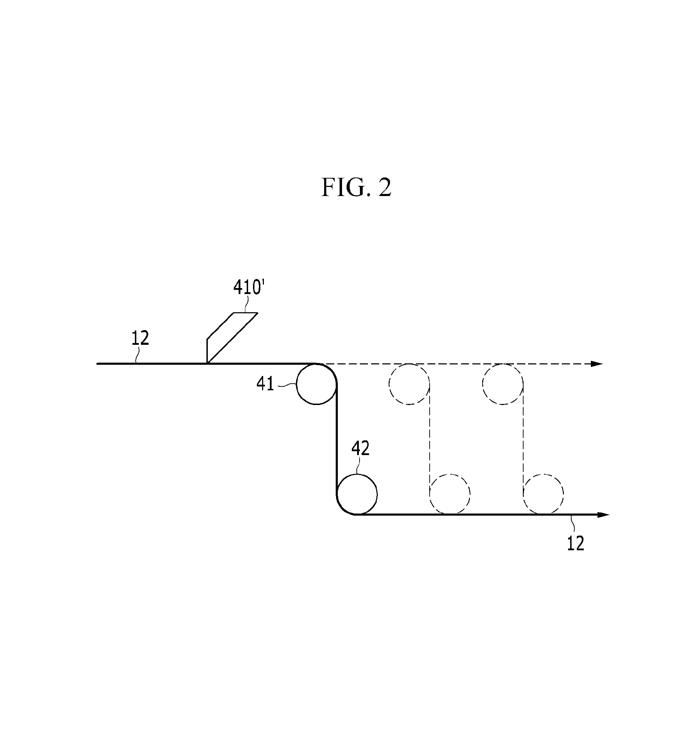

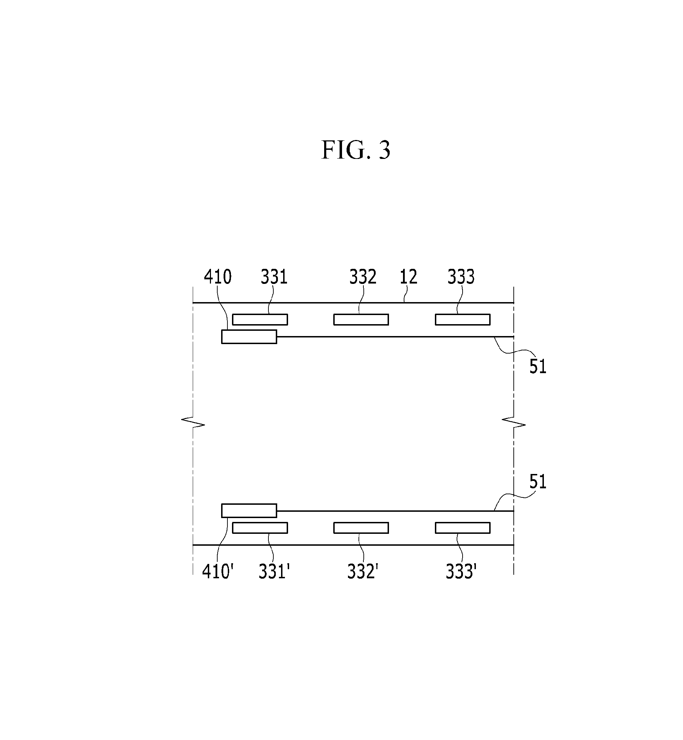

FIG. 1 is a top view of an exemplary embodiment of a film manufacturing apparatus according to the invention, FIG. 2 is a side view of a part of the film manufacturing apparatus of FIG. 1, and FIG. 3 is a top view of a part of the film manufacturing apparatus of FIG. 1.

An exemplary embodiment of the film manufacturing apparatus includes a material supply unit 100, a stretching and heat treatment unit 200, and a film recovery unit 300.

The material supply unit 100 may include a wet film made of a film material, such as an imide precursor, an amide and the like, for example, and the wet film may be wound therein. In one embodiment, for example, the material supply unit 100 may include a supply roll that provides the wet film to the stretching and heat treatment unit 200.

The stretching and heat treatment unit 200 includes a pre-heating unit 210, a stretching unit 220 and a heat treatment unit 230.

The pre-heating unit 210 may include clip arms 310 and 310' that clip horizontal lateral ends of an intermediate film 11 provided from the material supply unit 100, and a hot wind device or an infrared ("IR") device (not shown) that supplies heat for pre-heating the intermediate film 11. Each of the clip arms 310 and 310' includes a plurality of clip protrusions 311, 312, 313, 311', 312' and 313', and the clip protrusions 311, 312, 313, 311', 312' and 313' clip the intermediate film 11 to move the intermediate film 11 toward the stretching unit 220 from the material supply unit 100. In an exemplary embodiment, a device of the pre-heating unit 210, e.g., the clip arms 310 and 310', may be arranged in a closed space defined in one or more chambers. The number of clip arms 310 and 310' and the number of clip protrusions 311, 312, 313, 311', 312' and 313' are not limited to those shown in FIG. 1, and may be increased or decreased based on characteristics (e.g., a size) of the intermediate film 11.

The stretching unit 220 may include clip arms 320 and 320' that clip horizontal lateral ends of the intermediate film 11 transferred from the pre-heating unit 210, and a hot wind device or an IR device (not shown) for supplying heat for a heat treatment of the intermediate film 11 (hereinafter, also referred to as a "first heat treatment"). Here, the horizontal lateral ends or lateral ends of a film may refer to end portions of sides of the film substantially parallel to a transfer or moving direction thereof in the film manufacturing apparatus. Each of the clip arms 320 and 320' includes a plurality of clip protrusions 321, 322 and 323, or 321', 322' and 323'. In an exemplary embodiment, the clip arms 320 and 320' are arranged in a predetermined manner in which distances between the clip protrusions 321, 322, 323, 321', 322' and 323' facing each other in a vertical or transverse direction are gradually increased as moving toward the heat treatment unit 230 from the pre-heating unit 210. Herein, the vertical or transverse direction refers to a direction vertical to transfer or moving direction and a thickness direction of the film in the film manufacturing apparatus. Thus, in such an embodiment, when the clip protrusions 321, 322, 323, 321', 322' and 323' clip the intermediate film 11 and move toward the heat treatment unit 230 from the pre-heating unit 210, the intermediate film 11 may be gradually stretched substantially in the vertical or transverse direction such that the intermediate film 11 may be applied with a transverse tension. In an alternative exemplary embodiment, the clip arms 320 and 320' of the stretching unit 220 may be arranged in a manner such that the clip protrusions 321, 322, 323, 321', 322', 323' disposed facing each other may be equally distanced or the distances therebetween may be gradually decreased. In such an embodiment, a stretching of the intermediate film 11 may be performed based on a contraction by the heat treatment to the intermediate film 11. In an exemplary embodiment, a device of the stretching unit 220, e.g., the clip arms 320 and 320, may be arranged in a closed space defined in one or more chambers. In such an embodiment, the number of clip arms 320 and 320' and the number of clip protrusions 321, 322, 323, 321', 322' and 323' are not limited to the numbers of those shown in FIG.1, but may be increased or decreased based on characteristics of the intermediate film 11.

In an exemplary embodiment, as shown in FIGS. 1 and 2, the heat treatment unit 230 may include clip arms 330 and 330' that clip horizontal lateral ends of the stretched intermediate film 12 supplied from the stretching unit 220, cutting devices 410 and 410' that cut the stretched intermediate film 12 at a predetermined location, control rolls 41 and 42 that controls a longitudinal or transfer directional tension of the stretched intermediate film 12, and a hot wind device or an IR device (not shown) that supplies heat for a heat treatment of the stretched intermediate film 12 (hereinafter, also referred to as a "second heat treatment"). Herein, the longitudinal or transfer directional tension of a film may refer to a tension thereof in a direction substantially parallel to a transfer or moving direction of the film in the film manufacturing apparatus. The clip arms 330 and 330' respectively include a plurality of clip protrusions 331, 332, 333, 331', 332' and 333', and the clip protrusions 331, 332, 333, 331', 332' and 333' clip the stretched intermediate film 12 and move the intermediate film 12 to the film recovery unit 300 from the stretching unit 220. The cutting devices 410 and 410' are disposed at a predetermined location of the heat treatment unit 230, e.g., a location corresponding to a portion of the stretched intermediate film 12, which is between a portion where the stretched intermediate film 12 is clipped and a center portion 51 defined between lateral ends of the stretched intermediate film 12, as shown in FIG. 3, to cut and separate the center portion from the clipped portion of the stretched intermediate film 12. In such an embodiment, the cutting by the cutting devices 410 and 410' may effectively prevent the center portion of the stretched intermediate film 12 from receiving a transverse directional tension. In one exemplary embodiment, for example, the cutting devices 410 and 410' may be disposed adjacent to leftmost clip protrusions 331 and 331' as shown in FIG. 1, but the locations of the cutting devices 410 and 410' in the heat treatment unit 230 are not limited thereto. In an alternative exemplary embodiment, the cutting devices 410 and 410' may be disposed further to the left side than the leftmost clip protrusions 331 and 331', and may be provided between the clip protrusions 331, 332, 333, 331', 332' and 333'. In another alternative exemplary embodiment, the cutting devices 410 and 410' may be disposed in the stretching unit 220. In an exemplary embodiment, the cutting devices 410 and 410' may be connected to a rail or a chain which allows the location of the cutting device 410 and 410' to be controlled, and a plurality of cutting device holders that holds the cutting devices therein may be provided in a chamber of the heat treatment unit 230 or the stretching unit 220. In an exemplary embodiment, the control rolls 41 and 42 control the longitudinal tension such that a center portion of the stretched intermediate film 12 separated from the clipped portion by the cutting devices 410 and 410' is received with predetermined strength. In one exemplary embodiment, for example, in case of manufacturing a polyimide film for a display substrate, the tension may be controlled to be less than 30 Newtons (N), and locations of the rolls 41 and 42 may be variously controlled. In one exemplary embodiment, for example, the control rolls 41 and 42 may be disposed subsequent to the cutting devices 410 and 410' in the transfer direction, e.g., at a location immediately after the cutting location of the stretched intermediate film 12, as shown in FIG. 3. A device of the heat treatment unit 230, e.g., the clip arms 330 and 330', the cutting devices 410 and 410', and the control rolls 41 and 41', may be arranged in a closed space defined in one or more chambers. The number of clip arms 330 and 330' and the number of clip protrusions 331, 332, 333, 331', 332', 333' are not limited to the number of those shown in FIG. 1, and may be increased or decreased based on a characteristics of the stretched intermediate film 12. In an alternative exemplary embodiment, the control rolls 41 and 41' may be omitted and the transverse directional tension may be controlled by the film recovery unit 300.

In an exemplary embodiment, the clip arms 310, 310', 320, 320', 330 or 330' of the film manufacturing apparatus may define a clipping device of the film manufacturing apparatus, which clips lateral ends of the intermediate film to transfer the intermediate film and applies a transverse directional tension to the intermediate film.

The film recovery unit 300 may receive a completed film from the heat treatment unit 230 by winding the film to a recovery roll thereof (not shown). The film recovery unit 300 may control the transverse directional tension applied to the stretched intermediate film 12 separated from the clipped portion with predetermined strength.

In an exemplary embodiment, the clip arms 310, 310', 320, 320', 330 and 330' of the film manufacturing apparatus may be tenter devices. In an alternative exemplary embodiment, the clip protrusions may be replaced with a plurality of pins. In such an embodiment, thin films may be put along the edge of the film to fix the film.

Hereinafter, operation of an exemplary embodiment of the film manufacturing apparatus will be described.

In an exemplary embodiment, when the intermediate film 11 is provide from the material supply unit 100, the clip arms 310 and 310' of the pre-heating unit 210 clip the horizontal lateral ends of the intermediate film 12 and pull the clipped intermediate film 11 toward the stretching unit 220. In such an embodiment, the intermediate film 11 is pre-heated to a predetermined temperature, for example, a temperature in a range of about 150°C to about 250 °C in case of manufacturing a polyimide film.

In an exemplary embodiment, the clip arms 320 and 320' of the stretching unit 220 clip the pre-heated intermediate film 11 to pull the pre-heated intermediate film 11 toward the heat treatment unit 230 and at the same time pull the film 11 substantially in the vertical direction to stretch the film 11. In such an embodiment, the intermediate film 11 is firstly heat-treated at a predetermined temperature, for example, a temperature of about 200 °C to about 300 °C in case of manufacturing a polyimide film.

The intermediate film 12 stretched and firstly heat-treated by the stretching unit 220 is clipped by the clip arms 330 and 330' of the heat treatment unit 230 and then moved or pulled toward the film recovery unit 300, and the cutting devices 410 and 410' cut the stretched intermediate film 12 at a predetermined location to separate the center of the stretched intermediate film 12 from the portion clipped by the clip protrusions 331, 332, 333, 331', 332', and 333'. In an exemplary embodiment, the stretched intermediate film 12 is secondly heat-treated at a predetermined temperature, for example, a temperature in a range of about 250 °C to 350 °C in case of manufacturing a polyimide film.

A solvent included in the intermediate film 11 is removed through the first and second heat treatment, and a chemical reaction, such as an imidization reaction, is performed such that a film is completed.

The completed film is received in the recovery roll provided in the film recovery unit 300 using a predetermined method such as spiral-winding and the like.

As described, in an exemplary embodiment, when application of transverse directional tension to the center portion of the stretched intermediate film 12 is blocked at a predetermined location and a transverse directional tension with respect to a transfer direction of the intermediate film 12 is thereby controlled before completion of heat-treatment, the completed film may be effectively prevented from having a light retardation value different from a predetermined value and a yellow index of the completed film may be reduced. Herein, the yellow index indicates the degree of a yellow color in the film.

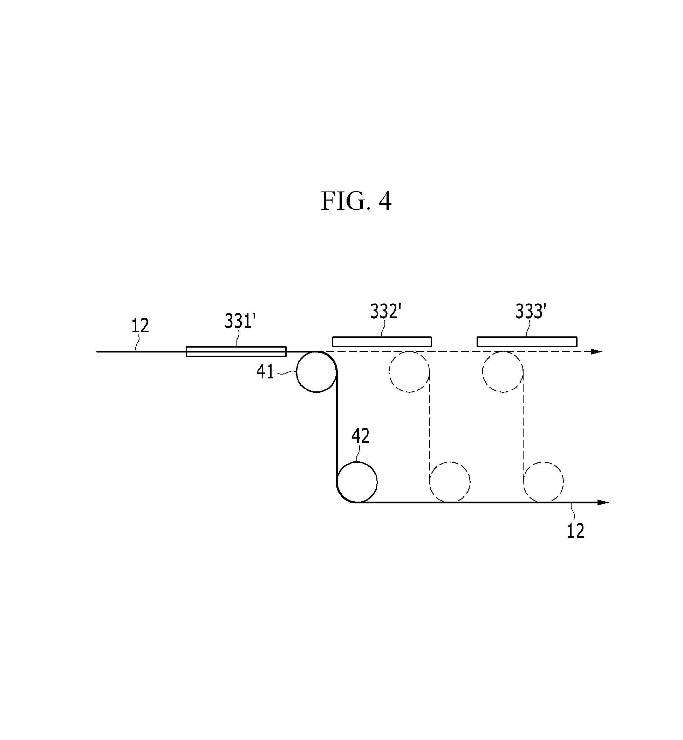

FIG. 4 is a side view of a part of another exemplary embodiment of the film manufacturing apparatus according to the invention.

In another exemplary embodiment of a film manufacturing apparatus according to the invention, the cutting devices 410 and 410' of FIG. 1 are omitted, and a heat treatment unit 230 drives each of a plurality of clip protrusions 331, 332, 333, 331', 332' and 333' independently of each other such that the clip protrusions 331, 332, 333, 331', 332' and 333' may control a release location of clipping of a stretched intermediate film 12. In such an embodiment, a plurality of clip protrusions 321, 322, 323, 321', 322' and 323' of a stretching unit 220 may also be independently driven. In such an embodiment, a material supply unit 100, a film recovery unit 300, and a pre-heating unit 210 may be substantially the same as those of an exemplary embodiment described above with reference to FIG. 1, and any repetitive detailed description thereof will be omitted.

The plurality of clip protrusions 331, 332, 333, 331', 332' and 333' of the heat treatment unit 230 are independently driven to clip or unclip (e.g., release) the stretched intermediate film 12. In one exemplary embodiment, for example, the stretched intermediate film 12 is clipped by the leftmost clip protrusions 331 and 331' of the heat treatment unit 230, and clipping of the stretched intermediate film 12 is released at the clip protrusions disposed thereafter to effectively prevent the stretched intermediate film 12 from receiving a transverse directional tension. Among the plurality of clip protrusions 331, 332, 333, 331', 332' and 333', clip protrusions that clip the stretched intermediate film 12 and clip protrusions that unclip the stretched intermediate film 12 may be variously modified. In such an embodiment, the plurality of clip protrusions 321, 322, 323, 321', 322' and 323' of the stretching unit 220 may be independently driven. In one exemplary embodiment, for example, the clip protrusions 321, 322, 321' and 322' may clip to pull the intermediate film 11, and the clip protrusions 323 and 323' may be controlled to unclip the intermediate film 11.

Operation of such an embodiment of a film manufacturing apparatus is similar to operation of an exemplary embodiment of the film manufacturing apparatus described above with reference to FIG. 1. In an exemplary embodiment of the film manufacturing apparatus shown in FIG. 1, the stretched intermediate film 12 is cut using the cutting devices 410 and 410' to effectively prevent the stretched intermediate film 12 from receiving the transverse directional tension. In an alternative exemplary embodiment, as shown in FIG. 4, the clip protrusions 331, 332, 333, 331', 332' and 333' selectively unclip, that is, clipping of the clip protrusions 331, 332, 333, 331', 332' and 333' is partially released, to effectively prevent the stretched intermediate film 12 from receiving the transverse directional tension.

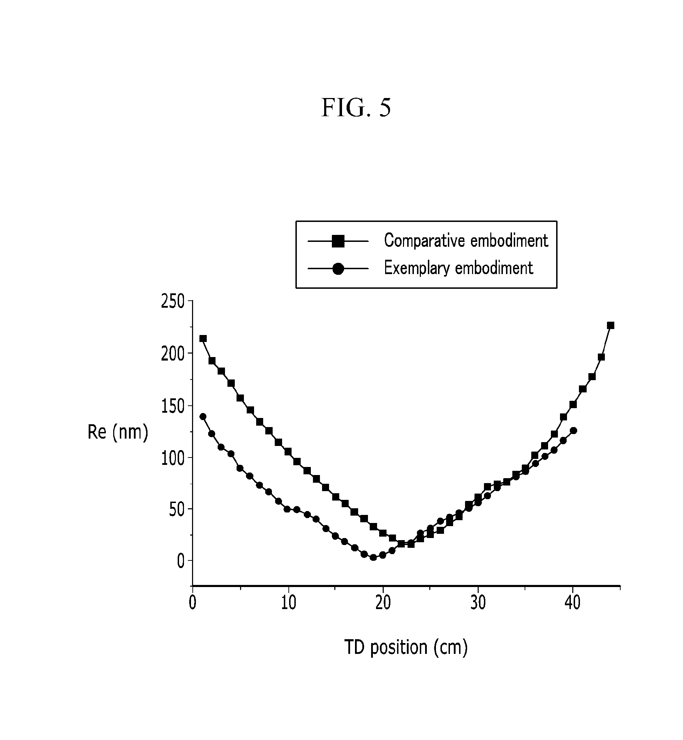

FIG. 5 is a graph of a comparison between retardation distribution of a film manufactured using an exemplary embodiment of the film manufacturing apparatus according to the invention and retardation distribution of a film manufactured using a conventional film manufacturing apparatus.

The retardation distribution curve of the film manufactured using an exemplary embodiment of the film manufacturing apparatus is located lower than the retardation distribution curve of the film manufactured using the conventional film manufacturing apparatus, that is, the film manufactured using the film manufacturing apparatus according to the exemplary embodiment has lower retardation values at most test dots, and accordingly, the film manufactured using an exemplary embodiment of the film manufacturing apparatus according to the invention has improved characteristics. The characteristics of the films of FIG. 5 are shown in Table 1.

**Table 1**

| | Comparative Example | Exemplary Embodiment |
|---|---|---|
| Retardation average (nm) | 96.4 | 59.2 |
| Retardation standard deviation (nm) | 59.4 | 37.6 |
| Yield (%), area less then retardation of 15 nm | 2.3 | 12.5 |

As described, retardation of the film manufactured using an exemplary embodiment of the film manufacturing apparatus is lower at most test dots compared to retardation of the film manufactured using the conventional film manufacturing apparatus, and accordingly, more wide areas thereof may be used to produce a product with improved quality.

Table 2 shows measurements of a characteristic of a film manufactured by cutting an intermediate film at various temperatures during a heat-treatment process for manufacturing a polyimide film. The measurement was performed in the following conditions: a 20 centimeters (cm) ×10 centimeters (cm) half-dried polyimide film was polymerized in a solvent of dimethylacetamide ("DMAc") and dried. Monomer mole ratio of the polyimide film was: 4,4'-(hexafluoroisopropylidene)) diphthalic anhydride ("6FDA") 25, 3,3',4,4'-biphenyltetracarboxylic dianhydride ("BPDA") 75, 2,2'-bis trifluoromethyl-4,4'-biphenyl diamine ("TFDB") 100. When about 20 weight percent (wt%) of the solvent remained, the film was put in a furnace and heat-treated by increasing the temperature of the furnace from about 100 °C to about 350 °C at a speed of about 25 °C/min, and during the heat-treatment, the film was cut.

**Table 2**

| | | | |
|---|---|---|---|
| | Retardation | | Yellow index at thickness of 45 micrometers (µm) |

| Average | Standard deviation | | |
|---|---|---|---|
| No cutting | 194.1 | 28.7 | 5.98 |
| Cutting at 275 °C | 65.1 | 7.3 | 5.86 |
| Cutting at 300 °C | 139.5 | 15.8 | 5.96 |
| Cutting at 350 °C | 102.4 | 21.4 | 6.64 |

According to Table 2, when the transverse directional tension is removed by cutting the intermediate film at a temperate between about 275 °C and the final temperature of the heat treatment, a retardation value of the film is reduced such that an optical characteristic is substantially improved. Also, the yellow index may be decreased, except for a case of cutting the intermediate film at about 350 °C.

While the invention has been described in connection with what is presently considered to be practical exemplary embodiments, it is to be understood that the invention is not limited to the disclosed embodiments.

## Claims

1. A film manufacturing apparatus comprising:
a material supply unit which supplies an intermediate film;
a pre-heating unit which pre-heats the intermediate film supplied from the material supply unit;
a stretching unit which stretches and performs a first heat-treatment to the intermediate film supplied through the pre-heating unit;
a heating treatment unit which performs a second heat-treatment to the stretched intermediate film supplied from the stretching unit;
a clipping device which clips lateral ends of the intermediate film to transfer the intermediate film and applies a transverse directional tension with respect to a transfer direction of the intermediate film, to the intermediate film; and
a cutting device disposed in at least one of the stretching unit and the heat-treatment unit, wherein the cutting device separates the lateral ends from a center portion of the intermediate film between the lateral ends by cutting the intermediate film.

2. The film manufacturing apparatus of claim 1, further comprising:
a control roll which controls a transfer directional tension of the intermediate film,
and preferably wherein the control roll is disposed subsequent to the cutting device in the transfer direction.

3. The film manufacturing apparatus of any preceding claim, wherein a location of the cutting device is movable in the stretching unit or the heat-treatment unit,
and preferably wherein the cutting device is arranged to cut the intermediate film when a heat-treatment temperature is in a range between 250 °C to 400 °C.

4. The film manufacturing apparatus of any preceding claim, further comprising:
a film recovery unit which receives a film passed through the heat-treatment unit by spirally winding the film.

5. The film manufacturing apparatus of any preceding claim, wherein
the clipping device comprises a plurality of pins.

6. A film manufacturing apparatus comprising:
a material supply unit which supplies an intermediate film;
a pre-heating unit which pre-heats the intermediate film supplied from the material supply unit;
a stretching unit which stretches and performs a first heat treatment to the intermediate film supplied through the pre-heating unit;
a heating treatment unit which performs a second heat treatment to the stretched intermediate film supplied from the stretching unit; and
a clipping device which clips lateral ends of the intermediate film to transfer the intermediate film and applies a transverse directional tension with respect to a transfer direction of the intermediate film, to the intermediate film,
wherein the clipping device is arranged to remove the transverse directional tension by selectively unclipping the intermediate film in at least one of the stretching unit and the heat-treatment unit.

7. The film manufacturing apparatus of claim 6, further comprising:
a control roll which controls a transfer directional tension of the intermediate film.

8. The film manufacturing apparatus of claim 6 or 7, wherein the control roll is disposed subsequent to the cutting device in the transfer direction.

9. The film manufacturing apparatus of claim 6, 7 or 8, wherein
the clip device comprises a plurality of clip protrusions, and
the clip protrusions independently clip the intermediate film or unclip the clip of the intermediate film.

10. The film manufacturing apparatus of claim 6, 7, 8 or 9, wherein the clip device is arranged to release the clip of the intermediate film when a heat-treatment temperature is in a range between 250 °C and 400 °C.

11. A film manufacturing method comprising:
supplying an intermediate film;
clipping lateral ends of the intermediate film to move the intermediate film and to apply a transverse directional tension with respect to a movement direction of the intermediate film, to the intermediate film;
pre-heating the intermediate film;
stretching and performing a first heat treatment to the pre-heated intermediate film; and
performing a second heat treatment to the intermediate film on which the first heat treatment is performed,
wherein the film manufacturing method further comprises removing the transverse directional tension from the intermediate film when at least one of the first heat-treatment and the second heat-treatment is performed.

12. The film manufacturing method of claim 11, wherein removing the transverse directional tension from the intermediate film comprises separating the lateral ends from a center portion of the intermediate film between the lateral ends.

13. The film manufacturing method of claim 11 or 12, wherein removing the transverse directional tension from the intermediate film comprises unclipping the lateral ends of the intermediate film.

14. The film manufacturing method of claim 11, 12 or 13, wherein removing the transverse directional tension from the intermediate film is performed when a heat treatment temperature is in a range between about 250 °C and about 400 °C.

15. The film manufacturing method of claim 11, 12, 13 or 14, further comprising:
recovering a film by spirally winding the film passed through the second heat treatment to receive the film.
